# EUROPÄISCHE PATENTSCHRIFT

(11) **EP 2 142 335 B1**
(45) Veröffentlichungstag und Bekanntmachung des Hinweises auf die Patenterteilung: **06.05.2015**
(21) Anmeldenummer: 08716598.1
(22) Anmeldetag: 18.03.2008
(51) Int. Cl.: B23K 37/04, B23P 19/00

(54) **HERSTELLVERFAHREN FÜR MASCHINEN**
PRODUCTION METHOD FOR MACHINES
PROCÉDÉ DE PRODUCTION POUR MACHINES

(30) Priorität: 23.04.2007 DE 102007019378
(43) Veröffentlichungstag der Anmeldung: 13.01.2010
(73) Patentinhaber: KHS GmbH, 44143 Dortmund (DE)
(72) Erfinder: JENDRICHOWSKI, Klaus, 59439 Holzwickede (DE); WIEDEMANN, Ulrich, 44135 Dortmund (DE)
(86) Internationale Anmeldenummer: PCT/EP2008/002138
(87) Internationale Veröffentlichungsnummer: WO 2008/128607

(56) Entgegenhaltungen:
- EP-A- 1 008 510
- EP-A- 1 331 059
- DE-C1- 10 158 264
- GB-A- 1 601 603
- GB-A- 2 427 175
- US-A- 2 738 866
- US-A- 5 035 046

## Beschreibung

Die Erfindung betrifft ein Herstellverfahren für Maschinen für die Getränkeindustrie wie Reinigungsmaschinen, Pasteurisierungsmaschinen, Schrumpftunnel oder dergleichen, wobei die Bauteile der Maschine durch Schweißverfahren und durch lösbare Verbindungen aus Einzelteilen zusammengesetzt werden. Dabei wird eine nicht zur Maschine gehörenden Haltevorrichtung bereitgestellt, an der eine erste Seitenwand befestigt wird, nachfolgend wird eine zweite, gegenüberliegende Seitenwand in einem Abstand positioniert, der geringfügig größer ist als der Abstand, den die Seitenwände nach vollständigem Zusammenbau zueinander aufweisen. Im anschließenden Einbauschritt werden Mitteleinbauteile zwischen den Seitenwänden angebracht, wobei mindestens eine der Seitenwände Stützelemente aufweist, mittels welcher mindestens eine Teilzahl der Mitteleinbauten gehalten und/oder von diesen getragen werden können. Zum Abschluss werden die Haltevorrichtungen angenähert, so dass die Maschine verschlossen wird und nachfolgend mittels Laser- oder Elektronenstrahlschweißverfahren verschweißt werden kann.

Im Stand der Technik sind Maschinen bekannt, die ausgehend von einem vorgefertigten Rahmen komplettiert werden. Der Maschinenrahmen ist dabei in den wesentlichen Geometrien in allen drei Raumrichtungen festgelegt. Die Maschinenteile, Baugruppen, Böden, Motoren etc. werden in diesen Rahmen eingebracht und mit selbigem Rahmen lösbar oder nichtlösbar verbunden. Weiterhin sind ein Großteil der Baugruppen und Einbauten untereinander und mit den Seitenwänden verschweißt.

Diese Fertigungsart ist bewährt, hat aber den Nachteil, dass die Ausführung von Arbeiten in dem starren Maschinenrahmen schwierig ist, wobei sich mit Fortschreiten der Arbeiten der zur Verfügung stehende Arbeitsraum immer weiter verringert. Durch den würfelartigen Grundrahmen ist weiterhin eine starke Einschränkung gegeben, was die Vorfertigung und Einbringung von komplexeren Baugruppen angeht. Die meisten Einbauten müssen daher innerhalb des Grundrahmens zusammengefügt werden. Dies ist zeitintensiv und beschwerlich für die Monteure.

Damit besteht die Aufgabe der Erfindung darin, diesen Mangel zu beheben und ein Herstellverfahren bereitzustellen, dass eine vereinfachte und schnellere Montage ermöglicht.

Diese Aufgabe löst die vorliegende Erfindung durch ein Verfahren nach Anspruch 1, wobei mindestens die folgenden Schritte durchlaufen werden:
a) Bereitstellen einer nicht zur Maschine gehörenden Haltevorrichtung, umfassend mindestens ein Halteelement, mittels welchem mindestens eine der Seitenwände der Maschine gestützt oder getragen werden kann,
b) Erstellen und Ausrichten mindestens eines Teils einer ersten Maschinenseitenwand,
c) Erstellen und Ausrichten mindestens eines Teils einer zweiten, gegenüberliegenden Maschinenseitenwand in einem Abstand, der geringfügig größer ist als der Abstand, den die Seitenwände nach vollständigem Zusammenbau zueinander aufweisen,
d) Positionieren von Mittelbaubauteilen zwischen den Seitenwänden, wobei mindestens eine der Seitenwände Stützelemente aufweist, mittels welcher mindestens eine Teilzahl der Mitteleinbauten gehalten und/oder von diesen getragen werden können (Einbauschritt),
e) Verschluss der Maschine durch Aneinanderpressung der durch die Mitteleinbauten überbrückten und gegenüberliegenden Seitenflächen (Verschlussschritt) und
f) Verschweißung mindestens eines Teils der Mitteleinbauten mit den Seitenflächen, wobei idealerweise ein Laser- oder Elektronenstrahlschweißverfahren eingesetzt wird.

Dabei sollen im Zusammenhang mit diesem Verfahren und der Vorrichtung unter den Begriffen Mitteleinbauten und/oder Mitteleinbauteilen solche Elemente verstanden werden, die im Wesentlichen selbsttragend den Abstand von einer Seitenwand zur anderen, bzw. zu den dort vorgesehenen Stützelementen, überbrücken. Die sonstigen statischen oder beweglichen Einbauten, die bei einem derartigen Verfahren und Maschine zu sehen sind, werden nachfolgend nicht näher betrachtet oder genannt.

Eine Verbesserung besteht darin, die Mitteleinbauten im Schritt d) zuerst an einer der beiden Seitenwände zu befestigen. Dies kann über geeignete Schraub- oder Nietverbindung erfolgen sowie ein geeignetes Schweißverfahren. Zur Vermeidung von thermisch bedingten Verformungen wird idealerweise ein Strahlverfahren eingesetzt, wie zum Beispiel ein Laserschweißverfahren. Im Bereich der gegenüberliegenden Seitenwand, die geringfügig von den freien Enden der Mitteleinbauten beabstandet ist, liegen die Mitteleinbauteile lose auf den dort vorgesehenen Stützelementen auf. Auf diese Weise bleibt der Arbeitsbereich bis zum Montageende in Schritt f) frei zugänglich und weitere Mitteleinbauten können leicht hinzugefügt und untereinander verbunden und/oder verschweißt werden. Die einseitige Befestigung der Mitteleinbauten an der ersten Seitenwand kann dabei selektiv und/oder zeitlich versetzt erfolgen. Es bietet sich zum Beispiel an, nur sehr große und schwere Mitteleinbauten einzeln anzuschweißen und nach dem Verschlussschritt, alle restlichen Mitteleinbauten in einem fortlaufenden Schweißvorgang zu verschweißen.

Idealerweise wird mindestens ein Teil der Schweißverbindungen von außen durch die Seitenwand hindurch vorgenommen, in dem von außen die im Inneren der Maschine stumpf oder planparallel anliegenden Mitteleinbauten durch die Behälterwand hindurch an dieser und/oder untereinander verschweißt werden. Auf diese Weise wird die Montage weiter beschleunigt, so dass viele Schweißvorgänge von außen in einer gut zugänglichen Position und/oder maschinell vorgenommen werden können.

Um zu einer sehr materialarmen Leichtbauweise zu gelangen, wird in einer weiteren Variante des Verfahrens die erste Seitenwand aus im Wesentlichen zwei parallelen Elementen gebildet. Diese umfassen eine Innenwand und eine Außenwand, welche über Stege beabstandet und miteinander verbunden sind. Idealerweise weist die Innenwand eine Vielzahl von Aussparungen und Öffnungen auf, durch welche die Stützelemente hindurchgeführt und/oder Innen- und Außenwand miteinander verbunden werden können. Dabei ragen die Stützelemente in den Innenraum der Maschine, so dass die Mitteleinbauten gemäß Schritt d) getragen und/oder gestützt werden können.

Dabei ist es vorteilhaft, wenn die Stützelemente in einem ersten Schritt an der Außenwand befestigt oder mit dieser verbunden werden und anschließend die Innenwand auf die Stützelemente geschoben wird.

Bei einem verbesserten Verfahren werden Aussparungen und Öffnungen in den Seitenwänden in den Seitenwänden mittels eines Strahlverfahrens und idealerweise mittels Elektronen- oder Laserstrahlverfahren hergestellt. Diese Laser- oder Elektronenstrahlverfahren zum Materialschnitt sind sehr exakt, so dass kein oder fast keine Nachbearbeitung erforderlich ist und die aus der automatischen Fertigung kommenden Halbzeuge direkt eingebaut werden können.

Zur Verbesserung der Einrichtung und zur Kontrolle der Montage ist es hilfreich, wenn vor dem Einbau in Schritt b) und/oder c) mindestens auf einer der Seitenwände mittels eines Elektronenstrahl- und/oder Laserstrahlverfahrens Bemaßungen und/oder Anrisslinien aufgebracht werden. Dies kann in einem Arbeitsschritt mit dem Strahlschneiden von Öffnungen und Aussparungen erfolgen und verlängert die Bearbeitung daher nur unwesentlich.

Bei einer optimierten Verfahrensvariante werden die Mitteleinbauten so weit wie möglich aus mehreren oder einer Vielzahl von Einzelteilen bestehenden Komponenten vorgefertigt. Insbesondere gas- und/oder flüssigkeitsführenden Zwischenböden können als Fertigbauteile montiert werden. Kleine Öffnungen in den Seitenflächen, die gegebenenfalls zur Aufnahme von Stützelementen vorgesehen werden müssen, werden nachfolgende von außen durch die Seitenwand dicht geschweißt.

Der besondere Vorteil des vorliegenden Verfahrens liegt darin, dass die Mitteleinbauten und sonstige Einbauten der Maschine im Wesentlichen nacheinander von unten nach oben eingebaut werden können und der Kopfraum bis zum Verschlussschritt zugänglich bleibt, so dass unterstützend Hebe- und Kranwerkzeuge eingesetzt werden können.

Von der Erfindung ist weiterhin eine Maschine für die Getränkeindustrie und Lebensmittelindustrie nach Anspruch 10. Dies umfasst mindestens ein Segment, welches nach einer der vorstehenden Verfahrensvarianten hergestellt wurde. Idealerweise besteht die Maschine aus mehreren Segmenten, die zeitgleich oder nacheinander nach ,einem Verfahren gemäß einem der vorgenannten Ansprüche hergestellt wurden.

Dabei weist diese Maschine eine Vielzahl von Stützelementen auf, auf welchen mindestens ein Teil der Mitteleinbauten mit mindestens einer Teilfläche aufliegen oder sich daran abstützen. In einer Variante der Maschine weist mindestens eine Teilzahl der Stützelemente einen Stegbereich und einen Trägerbereich auf, wobei idealerweise die Stützelemente mindestens an einem Ende ein Gewinde aufweisen.

Ein Verfahren und eine Vorrichtung gemäß den jeweiligen Oberbegriffen der Ansprüch 1 und 10 ist aus US 2738866 bekannt.

Das erfindungsgemäße Fertigungsverfahren und die Maschine ist an vorstehendem Beispiel erläutert, ohne auf die konkrete Ausführungsform eingeschränkt zu sein.
Fig. 1: Perspektivische Darstellung des Tragrahmens zu Beginn des Montageschrittes einer Reinigungsmaschine
Fig. 2: Perspektivische Darstellung einer sektionsweisen Fertigung einer Reinigungsmaschine

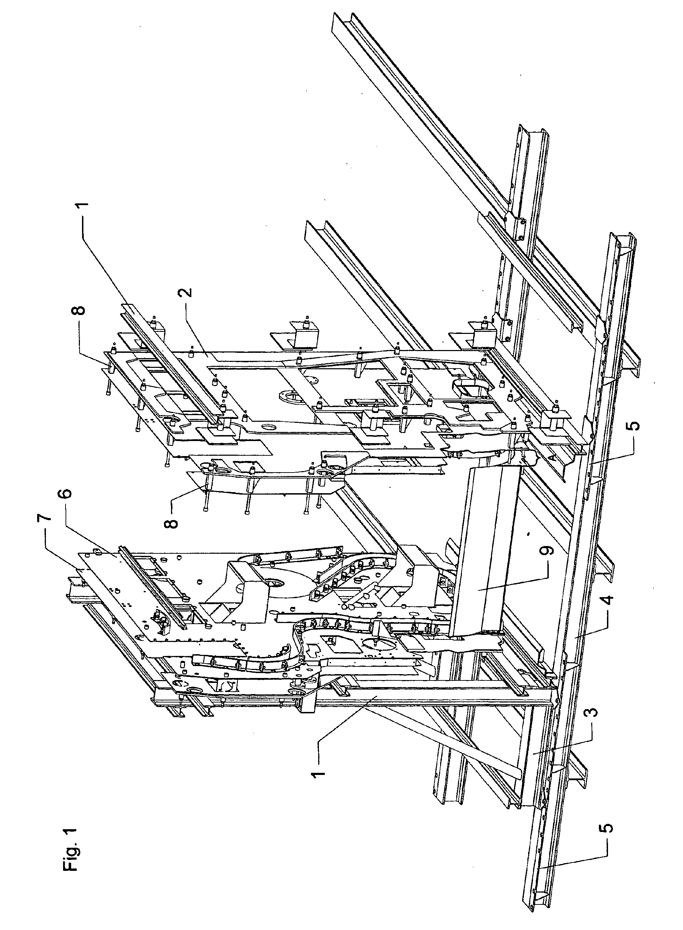

Fig. 1 zeigt eine Vorrichtung mit zwei Tragrahmen 1, auf denen Montageschablonen 2 befestigt sind, die wiederum Seitenwände tragen. Dargestellt ist die Vorrichtung zu Beginn des Verfahrensschrittes d) dem Einbauschritt bei der Montage einer Reinigungsmaschine.

Jeder der Tragrahmen 1 weist ein Fußteil 3 auf, welche auch einem gemeinsamen Trag- und Schienenkonstruktion 4 stehen, wobei der rechte Tragrahmen aus Gründen der Übersichtlichkeit nicht vollständig dargestellt ist. Der Tragrahmen 1 mit dem Fußteil 3 ist verschiebbar auf der in Richtung des gegenüberliegenden Tragrahmens 1 gelagert und kann auf einer an dem Trag- und Schienenkonstruktion 4 befestigten Lochleiste 5 in unterschiedlichen Positionen fixiert werden. Die Seitenwände bestehen aus einer Innenwand 6 und einer Außenwand 7, wobei die Innenwand 6 mittels einer Vielzahl von Stützelementen 8 gehalten und von der Außenwand 7 beabstandet wird. In der gezeigten Varianten weisen die Stützelemente 8 an ihrem äußeren Ende ein nicht dargestelltes Gewinde auf, so dass bei der Montage die Außenwand 8 mit der Montageschablone 2 und/oder dem Tragrahmen 1 verschraubt werden kann.

Weiterhin zeigt Fig. 1 einen Mitteleinbauteil 9, das an der ersten Seitenwand bzw. der Innenwand 6 anliegt und mit dieser in nicht dargestellter Weise ebenfalls über die Stützelemente 8 verschraubt wurde. Das freie Ende dieses Mitteleinbauteils 9 ruht auf dem freien Ende eines aus der rechten Seitenwand herausragenden Stützelementes 8 mit dem Abstand A, der als geschweifte Klammer dargestellt ist.

Nach dem Einbau aller Mittelbauteile 9 wird der rechte Trägerrahmen 1 auf der Schiene 4 in Richtung des gegenüberliegenden Trägerrahmens 1 verschoben, bis die Mittelbauteile beidseitig kraftschlüssig anliegen und verschweißt werden können. Das Laserschweißen erfolgt in dem hier gezeigten Beispiel weitestgehend von außen, wozu die Außenwand 7 große Zugangsöffnungen aufweist. Diese Zugangsöffnungen werden nachfolgend teilweise verschlossen.

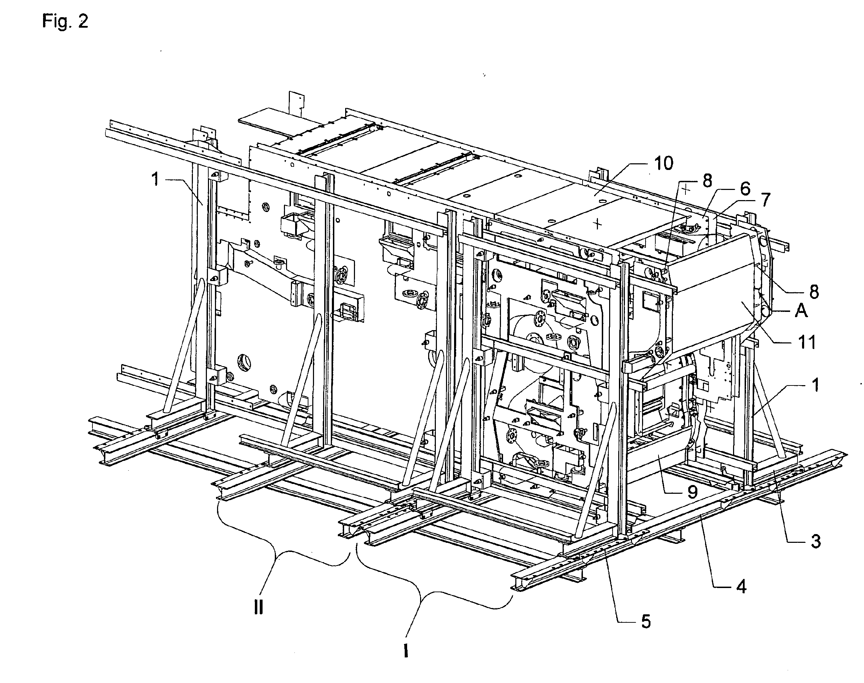

Die in Fig. 2 dargestellte Reinigungsmaschine ist kurz vor der Fertigstellung. Diese wurde abschnittsweise nach dem vorgenannten Prinzip gefertigt. Das gezeigte letzte Segment I wird bereits von oben verschlossen, wobei die Deckenmitteleinbauten 10 und die Frontmitteleinbauteile 11 gut erkennbar auf den freien Enden der herausragenden Stützelemente 8 ruhen. Die Reinigungsmaschine ist in dem Segment II und weiteren Segmenten komplettiert und nicht mehr mit dem Tragrahmen 1 verbunden, weiterhin sind die Montageschablonen 2 in diesen Segmenten entfernt.

Es ist erkennbar, dass das Verfahren für eine beliebig lange Maschine eingesetzt werden kann.

## Patentansprüche

1. Verfahren zur Maschinenfertigung von Maschinen für die Getränkeindustrie, nämlich Reinigungsmaschinen, Pasteurisierungsmaschinen oder Schrumpftunnel, wobei die Bauteile der Maschine durch Schweißverfahren und durch lösbare Verbindungen aus Einzelteilen und/oder Baugruppen zusammengesetzt wird, **dadurch gekennzeichnet, dass** mindestens die folgenden Schritte durchlaufen werden:
a) Bereitstellen einer nicht zur Maschine gehörenden Haltevorrichtung, umfassend mindestens ein Halteelement, mittels welchem mindestens eine der Seltenwände (6, 7) der Maschine gestützt oder getragen werden kann,
b) Erstellen und Ausrichten mindestens eines Teils einer ersten Maschinenseitenwand (6, 7),
c) Erstellen und Ausrichten mindestens eines Teils einer zweiten, gegenüberliegenden Maschinenseitenwand (6, 7) In einem Abstand, der geringfügig größer ist als der Abstand, den die Seitenwände nach vollständigem Zusammenbau zueinander aufweisen,
d) Positionieren von Mittelbauteilen (9) zwischen den Seitenwänden (6, 7), wobei mindestens eine der Seitenwände (6, 7) Stützelemente (8) aufweisen, mittels welcher mindestens eine Teilzahl der Mitteleinbauten (9) gehalten und/oder von diesen getragen werden können,
e) Verschluss der Maschine durch Aneinanderpressung der gegenüberliegenden Seitenflächen und
f) Verschweißung mindestens eines Teils der Mitteleinbauten (9) mit den Seitenflächen, wobei idealerweise ein Laser- oder Elektronenstrahischweißverfahren eingesetzt wird.

2. Verfahren nach Anspruch 1, **dadurch gekennzeichnet, dass** die Mitteleinbauten (9) im Schritt d) zuerst an einer der beiden Seitenwände (6, 7) befestigt werden und hinsichtlich der zweiten, gegenüberliegenden und geringfügig beabstandeten Seitenwand (6, 7) von deren Stützelementen (8) lose gehalten werden.

3. Verfahren nach Anspruch 1 oder 2, **dadurch gekennzeichnet, dass** mindestens ein Teil der Schweißverbindungen erfolgt, in dem von außen die im Inneren der Maschine stumpf anliegenden Mitteleinbauten (9) durch die Seitenwand hindurch an diese und/oder untereinander verschweißt werden.

4. Verfahren nach einem der vorstehenden Ansprüche, **dadurch gekennzeichnet, dass** die erste Seitenwand aus im Wesentlichen zwei parallelen Elementen (6, 7) besteht, einer Innenwand (6) und einer Außenwand (7), wobei die Innenwand (6) eine Vielzahl von Aussparungen und Öffnungen aufweist, durch welche die Stützelemente (8) hindurchgeführt und/oder Innen- und Außenwand (6, 7) miteinander verbunden werden können und welche die Mitteleinbauten (8) gemäß Schritt d) tragen und/oder stützen können.

5. Verfahren nach Anspruch 4, **dadurch gekennzeichnet, dass** die Stützelemente (8) in einem ersten Schritt an der Außenwand (7) befestigt oder mit dieser verbunden werden und anschließend die Innenwand (6) auf die Stützelemente (8) geschoben wird.

6. Verfahren nach einem der vorstehenden Ansprüche, **dadurch gekennzeichnet, dass** die Seitenwände (6, 7) vor dem Zusammenbau Aussparungen und Öffnungen aufweisen und mindestens ein Teil der Aussparungen und Öffnungen in den Seitenwänden (6, 7) mittels eines Strahlverfahrens und Idealerweise mittels Elektronen- oder Laserstrahlverfahren hergestellt werden.

7. Verfahren nach einem der vorgenannten Ansprüche, **dadurch gekennzeichnet, dass** vor dem Einbau In Schritt b) und/oder c) mindestens auf einer der Seitenwände (6, 7) mittels eines Elektronenstrahl- und/oder Laserstrahlverfahrens Bemaßungen und/oder Anrisslinien aufgebracht werden.

8. Verfahren nach einem der vorgenannten Ansprüche, **dadurch gekennzeichnet, dass** die Mitteleinbauten (8) vorgefertigte und aus mehreren oder einer Vielzahl von Einzelteilen bestehenden Komponenten sind.

9. Verfahren nach einem der vorgenannten Ansprüche, **dadurch gekennzeichnet, dass** die Mitteleinbauten (9) und sonstigen Einbauten der Maschine Im Wesentlichen von unten nach oben eingebaut werden.

10. Maschinen für die Getränkeindustrie und Lebensmittelindustrie, nämlich Reinigungsmaschinen, Pasteurisierungsmaschinen oder Schrumpftunnel,
**dadurch gekennzeichnet, dass**
diese mindestens ein Segment aufweisen, welches nach einem Verfahren gemäß einem der vorgenannten Ansprüche hergestellt wurde und idealerweise die Maschine mehrere Segmente aufweist, die zeitgleich oder nacheinander nach einem Verfahren gemäß einem der vorgenannten Ansprüche hergestellt wurden, wobei
diese eine Vielzahl von Stützelementen (8) aufweist, auf welchen mindestens ein Teil der Mitteleinbauten (9) mit mindestens einer Teilfläche aufliegen und wobei die Stützelemente (8) mindestens an einem Ende ein Gewinde aufweisen, um bei der Montage mit einer Montageschablone (2) und/oder einem Tragrahmen (1) der Haltevorrichtung verschraubt zu werden.

11. Machine nach Anspruch 10, **dadurch gekennzeichnet, dass** diese mindestens eine doppelte Seitenwand (6, 7) aufweisen und mindestens eine Teilzahl der Stützelemente (8) einen Stegbereich und einen Trägerbereich umfasst.

## Claims

1. Production method for machines for the beverage industry, particularly cleaning machines, pasteurization machines, or shrink tunnels, wherein the components of the machine are assembled from individual parts and/or modules by welding processes and by releasable connections, **characterised in that** at least the method comprises the following steps:
a) providing of a mounting fixture that is not part of the machine, comprising at least one mounting element, by means of which at least one of the side walls (6, 7) of the machine can be supported or carried,
b) installing and aligning of at least one part of a first machine side wall (6,7),
c) installing and aligning of at least a part of a second opposite machine side wall (6,7) at a distance that is slightly greater than the distance between the side walls after complete assembly,
d) positioning centre built-in parts (9) between the side walls (6,7), wherein at least one of the side walls (6,7) comprises support elements (8), by means of which at least a part number of the centre built-in parts (9) can be held and/or carried by these,
e) enclosing the machine by pressing together the opposite side surfaces, and
f) welding at least a part of the centre built-in parts (9) with the side surfaces, wherein preferably a laser or electron beam welding method is used.

2. Method according to claim 1, **characterised in that** the centre built-in parts (9) in step d) are first secured in one of the two side walls (6,7), and, in relation to the second opposite side wall (6,7) at a slightly lesser distance, are held loose by its support elements (8).

3. Method according to claim 1 or 2, **characterised in that** at least one part of the weld connections are carried out **in that**, from the outside, the centre built-in parts (9) which abut one another in the interior of the machine are welded through the side wall to this and/or to each other.

4. Method according to any one of the preceding claims, **characterised in that** the first side wall consists of two essentially parallel elements (6,7), one inner wall (6) and one outer wall (7), wherein the inner wall (6) comprises a plurality of cutouts and apertures, through which the support elements (8) are conducted and/or through which inner and outer wall (6,7) can be connected with one another and which can carry and/or support the centre built-in parts (8) in accordance with step d).

5. Method according to claim 4, **characterised in that** the support elements (8), in a first step, are secured to the outer wall (7) or connected to it, and then the inner wall (6) is pushed onto the support elements (8).

6. Method according to any one of the preceding claims, **characterised in that** the side walls (6,7) exhibit cutouts and apertures before the assembly, and at least a part of the cutouts and apertures in the side walls (6,7) are produced by means of a beam method, and ideally by means of an electron or laser beam methods.

7. Method according to any one of the preceding claims, **characterised in that**, before the installation in step b) and/or c), on at least one of the side walls (6,7) dimensioning and/or score lines are introduced by means of an electron beam and/or laser beam method.

8. Method according to any one of the preceding claims, **characterised in that** the centre built-in parts (8) are prefabricated and consist of several or a plurality of components consisting of individual parts.

9. Method according to any one of the preceding claims, **characterised in that** the centre built-in parts (6) and other built-in parts of the machine are installed essentially from bottom to top.

10. Machine for the beverage industry and food industry, particularly cleaning machines, pasteurization machines, or shrink tunnels, **characterised in that** they comprise at least one segment, which was produced by a method according to one of the preceding claims, and ideally the machine comprises several segments, produced simultaneously or sequentially in accordance with a method according to one of the preceding claims, wherein
it comprises a plurality of support elements (8), on which at least a part of the centre built-in parts (9) are in contact with at least one part surface, and wherein the support elements (8) comprise at least at one end a thread, in order, during assembly, to be screwed to an assembly template (2) and/or to a carrier frame (1) of the mounting fixture.

11. Machine according to claim 10, **characterised in that** it comprises at least one doubled side wall (6,7), and at least a part number of the support elements (8) comprise a web region and a carrier region.

## Revendications

1. Procédé servant à fabriquer des machines destinées à l'industrie des boissons, à savoir des machines de nettoyage, des machines de pasteurisation ou des tunnels de thermorétraction, sachant que les composants de la machine sont composés à partir de l'assemblage par des procédés de soudage et par des assemblages amovibles de pièces spécifiques et/ou de modules, caractérisé en ce en ce que ledit procédé comprend au moins les étapes qui suivent consistant à :
a) fournir un dispositif de maintien ne relevant pas de la machine, comprenant au moins un élément de maintien, au moyen duquel au moins une des parois latérales (6, 7) de la machine peut être soutenue ou supportée ;
b) élaborer et orienter au moins une partie d'une première paroi latérale de machine (6, 7) ;
c) élaborer et orienter au moins une partie d'une deuxième paroi latérale de machine (6, 7) opposée à une distance qui est légèrement plus grande que la distance que présentent les parois latérales entre elles une fois l'assemblage finalisé ;
d) positionner des composants installés (9) entre les parois latérales (6, 7), sachant qu'au moins une des parois latérales (6, 7) présente des éléments de soutien (8), au moyen desquels au moins un nombre partiel des équipements centraux installés (9) peut être maintenu et/ou supporté par lesdits éléments de soutien ;
e) fermer la machine en pressant les unes contre les autres les faces latérales se faisant face ; et
f) souder au moins une partie des équipements centraux installés (9) aux faces latérales, sachant qu'on utilise idéalement un procédé de soudage par laser ou un procédé de soudage par faisceau d'électrons.

2. Procédé selon la revendication 1, **caractérisé en ce que** les équipements centraux installés (9) sont fixés à l'étape d) dans un premier temps au niveau de l'une des deux parois latérales (6, 7) et sont maintenus, par rapport à la deuxième paroi latérale (6, 7) opposée et légèrement distante, de manière lâche par les éléments de soutien (8) de ladite deuxième paroi latérale.

3. Procédé selon la revendication 1 ou 2, **caractérisé en ce qu'**au moins une partie des assemblages par soudage est effectuée, les équipements centraux installés (9) situés bout à bout à l'intérieur de la machine sont soudés, depuis l'extérieur, à travers la paroi latérale, au niveau de cette dernière et/ou les uns aux autres.

4. Procédé selon l'une quelconque des revendications précédentes, **caractérisé en ce que** la première paroi latérale est constituée essentiellement de deux éléments (6, 7) parallèles, à savoir d'une paroi intérieure (6) et d'une paroi extérieure (7), sachant que la paroi intérieure (6) présente une pluralité d'évidements et d'ouvertures, à travers lesquels les éléments de soutien (8) peuvent être guidés de part en part et/ou par lesquels la paroi intérieure et la paroi extérieure (6, 7) peuvent être reliées l'une à l'autre et lesquels peuvent supporter et/ou soutenir, selon l'étape d), les équipements centraux installés (9).

5. Procédé selon la revendication 4, **caractérisé en ce que** les éléments de soutien (8) sont fixés, au cours d'une première étape, au niveau de la paroi extérieure (7) ou sont reliés à cette dernière, puis **en ce qu'**immédiatement après la paroi intérieure (6) est glissée sur les éléments de soutien (8).

6. Procédé selon l'une quelconque des revendications précédentes, **caractérisé en ce que** les parois latérales (6, 7) présentent, avant l'assemblage, des évidements et des ouvertures, et **en ce qu'**au moins une partie des évidements et des ouvertures peut être fabriquée dans les parois latérales (6, 7) au moyen d'un procédé par rayonnement et idéalement au moyen d'un procédé par faisceau d'électrons ou par un procédé par rayon laser.

7. Procédé selon l'une quelconque des revendications précédentes, **caractérisé en ce que** des cotes et/ou des tracés sont pratiqués au moins sur l'une des parois latérales (6, 7) au moyen d'un procédé par faisceau d'électrons et/ou par un procédé par rayon laser avant l'installation à l'étape b) et/ou à l'étape c).

8. Procédé selon l'une quelconque des revendications précédentes, **caractérisé en ce que** les éléments centraux installés (9) sont des composants préfabriqués et constitués de plusieurs ou d'une pluralité de pièces spécifiques.

9. Procédé selon l'une quelconque des revendications précédentes, **caractérisé en ce que** les éléments centraux installés (9) et d'autres éléments installés de la machine sont montés essentiellement du bas vers le haut.

10. Machines destinées à l'industrie des boissons et à l'industrie agroalimentaire, à savoir machines de nettoyage, machines de pasteurisation ou tunnels de thermorétraction,
**caractérisées en ce**
**que** ces dernières présentent au moins un segment, qui a été fabriqué selon un procédé selon l'une quelconque des revendications précédentes, et en ce que la machine présente idéalement plusieurs segments, qui ont été fabriqués en même temps ou les uns après les autres selon un procédé selon l'une quelconque des revendications précédentes, sachant
**que** ces dernières présentent une pluralité d'éléments de soutien (8), sur lesquels repose au moins une partie des éléments centraux installés (9) par au moins une face partielle et sachant que les éléments de soutien (8) présentent au moins, au niveau d'une extrémité, un filetage afin d'être vissés lors du montage à un gabarit de montage (2) et/ou à un châssis de support (1) du dispositif de maintien.

11. Machines selon la revendication 10, **caractérisées en ce qu'**elles présentent au moins une double paroi latérale (6, 7) et comprennent au moins un nombre partiel des éléments de soutien (8), une zone d'entretoise et une zone porteuse.
